# EUROPÄISCHE PATENTSCHRIFT

(11) **EP 3 276 095 B1**
(45) Veröffentlichungstag und Bekanntmachung des Hinweises auf die Patenterteilung: **22.04.2020**
(21) Anmeldenummer: 17182161.4
(22) Anmeldetag: 19.07.2017
(51) Int. Cl.: E03D 9/16, F16K 3/03, F16K 3/08, B05B 1/30, G05D 23/02

(54) **VORRICHTUNG ZUM DROSSELN DES SPÜLSTROMS AUS EINEM SANITÄREN SPÜLKASTEN, ABLAUFVENTIL UND SANITÄRER SPÜLKASTEN MIT EINER SOLCHEN VORRICHTUNG**
DEVICE FOR THROTTLING THE PURGE STREAM FROM A SANITARY CISTERN, DRAIN VALVE AND SANITARY CISTERN COMPRISING SUCH A DEVICE
DISPOSITIF DESTINÉ À RÉDUIRE LE FLUX DE RINÇAGE PROVENANT DE RÉSERVOIR DE CHASSE D'EAU SANITAIRE, VANNE DE VIDANGE ET RÉSERVOIR DE CHASSE D'EAU SANITAIRE COMPRENANT UN TEL DISPOSITIF

(30) Priorität: 26.07.2016 DE 102016113772; 26.07.2016 DE 202016104089 U
(43) Veröffentlichungstag der Anmeldung: 31.01.2018
(73) Patentinhaber: Viega Technology GmbH & Co. KG, 57439 Attendorn (DE)
(72) Erfinder: Schulte, Philipp, 57368 Lennestadt (DE); Bergmoser, Sebastian, 57413 Finnentrop (DE)
(74) Vertreter: Cohausz & Florack

(56) Entgegenhaltungen:
- EP-A1- 3 228 766
- WO-A1-2017/036877
- WO-A2-2016/067304
- DE-A1- 2 805 038
- DE-A1- 19 821 648
- GB-A- 191 328 112
- US-A- 1 660 010
- US-A1- 2016 154 409

## Beschreibung

Die Erfindung betrifft eine Vorrichtung zum Drosseln des Spülstroms aus einem sanitären Spülkasten, insbesondere Toilettenspülkasten, welcher ein Ablaufventil enthält, das eine Ventilfassung, einen eine Dichtfläche oder Dichtung aufweisenden Ventilkörper, der in der Ventilfassung beweglich gelagert ist, einen Ablaufstutzen und einen an dem Ablaufstutzen ausgebildeten Ventilsitz aufweist, wobei die Dichtfläche oder Dichtung im geschlossenen Zustand des Ablaufventils auf dem Ventilsitz aufliegt und im geöffneten Zustand des Ablaufventils eine vom Ablaufstutzen definierte Ablauföffnung freigibt, mit einer Drossel, die mindestens einen freien Strömungsquerschnitt definiert, die Drossel in Spülstromfließrichtung betrachtet hinter dem Ventilsitz am oder im Ablaufstutzen des Ablaufventils oder in einem den Ablaufstutzen aufnehmenden Anschlussstutzen anordenbar ist, wobei die Drossel mindestens zwei Drosselelemente aufweist, von denen eines relativ zu einem anderen der Drosselelemente drehbar ist, so dass durch Drehen des drehbaren Drosselelements relativ zu dem anderen Drosselelement die Größe des mindestens einen freien Strömungsquerschnitts veränderbar ist. Des Weiteren betrifft die Erfindung ein Ablaufventil mit einer solchen Drossel gemäß dem Oberbegriff des Anspruchs 8. Schließlich betrifft die Erfindung einen sanitären Spülkasten, insbesondere Toilettenspülkasten, mit einer Drossel gemäß dem Oberbegriff des Anspruchs 11.

Ablaufventile für sanitäre Spülkästen, insbesondere Toilettenspülkästen, sind in vielfältigen Ausführungen bekannt (siehe z.B. EP 2 141 294 B1).

Die Stärke des Spülstroms in einer Toilette oder einem Urinal ist von der Höhendifferenz zwischen Spülkasten und Sanitärkeramik, dem Strömungswiderstand des den Spülkasten mit der Sanitärkeramik verbindenden Spülrohres sowie dem Strömungswiderstand der Sanitärkeramik abhängig. Ist der Spülstrom zu stark, kann dies zu Wasserspritzern aus der Sanitärkeramik heraus auf die Toilettenbrille und/oder auf den Boden neben die Sanitärkeramik führen. Um durch einen zu starken Spülstrom verursachte Wasserspritzer zu vermeiden, wird der Spülstrom gegebenenfalls gedrosselt. Hierzu werden herkömmlicherweise verschiedene Drosselringe mit unterschiedlichen Durchmessern in den Ventilsitz des Ablaufventils eingelegt, um den Strömungsquerschnitt im Ventilsitz zu verringern. Die Einstellung des Spülstroms mit den verschiedenen Drosselringen ist jedoch aufwendig und unkomfortabel. Zudem können einzelne der Drosselringe verlorengehen, was dann eine zufriedenstellende Einstellung des Spülstroms ausschließen kann.

Aus der GB 28 112 A ist ein Ventil bekannt, das für Rückstauwasser oder andere einen geringen Druck aufweisende Flüssigkeiten bestimmt ist. Das Ventil weist einen konischen Körper auf, in welchem eine erste Scheibe mit mehreren Öffnungen befestigt ist. Eine zweite, ähnliche Scheibe mit ähnlichen Öffnungen ist oberhalb der ersten Scheibe angeordnet und kann relativ zu der ersten Scheibe mittels eines an der Außenseite des Ventilgehäuses angeordneten Stellhebels gedreht werden. Die zweite Scheibe kann dabei derart zu der ersten Scheibe gedreht ist, dass die Öffnungen der beiden Scheiben miteinander fluchten und das Ventil somit geöffnet ist. Des Weiteren kann die zweite Scheibe relativ zu der ersten Scheibe aber auch soweit gedreht ist, dass die Öffnungen der beiden Scheiben nicht in Überdeckung liegen und das Ventil somit geschlossen ist. Das Ventil ist insbesondere als Steuerungsventil für Rückstauwasser bei der Papierherstellung bestimmt. Für eine Verwendung in einem Ablaufstutzen eines Ablaufventils eines Spülkastens bzw. einem Anschlussstutzen eines Spülkastens ist dieses bekannte Ventil nicht vorgesehen und aufgrund seines sperrigen Stellhebels auch nicht geeignet.

Die DE 28 05 038 A1 offenbart ein Mengen- und Absperrventil für Zweigriffarmaturen im Sanitärbereich, welches eine erste, nicht verdrehbare und mit einer Wasserdurchtrittsöffnung versehene Festscheibe und eine zweite gegenüber der Festscheibe verdrehbare und auf dieser aufliegenden Regelscheibe aufweist, wobei die Regelscheibe eine mit der Wasserdurchtrittsöffnung in Überlappung bringbare Ausnehmung enthält, so dass das Ventil aus einem absperrenden Zustand zumindest teilweise geöffnet und umgekehrt wieder geschlossen werden kann. Der DE 28 05 038 A1 lässt sich nicht entnehmen, dass das dort beschriebene Mengen- und Absperrventil als Ablaufventil für einen sanitären Spülkasten bzw. zum Drosseln eines Spülstroms aus einem sanitären Spülkasten geeignet wäre.

Die US 2016/0154409 A1 offenbart ein Zwei-Mengen-Ablaufventil, das einen doppelten Strömungssteuerungsmechanismus mit zwei Betätigungsknöpfen aufweist. Hierbei sind in einer Bodenplatte eines Schwimmers des Ablaufventils zwei relativ kleine erste Einlasslöcher und zwei größere zweite Einlasslöcher ausgebildet. In Abhängigkeit davon, welcher der beiden Betätigungsknöpfe betätigt wird, gibt eine Steuerscheibe, welche die Bodenplatte des Schwimmers kontaktiert, entweder die beiden ersten Einlasslöcher oder die beiden ersten Einlasslöcher zusammen mit den beiden zweiten Einlasslöchern frei. Hierdurch wird bei Betätigung des ersten Knopfes eine Spülung mit einer ersten Wassermenge und bei Betätigung des zweiten Knopfes eine Spülung mit einer zweiten Wassermenge, die unterschiedlich zu der ersten Wassermenge ist, ausgelöst. Des Weiteren umfasst dieses bekannte Ablaufventil ein erstes Justierelement in Form einer drehbaren, Durchgangsöffnungen aufweisen Ringscheibe, mittels der die offene Weite der beiden ersten Einlasslöcher eingestellt werden kann, sowie ein zweites Justierelement in Form einer drehbaren, Durchgangsöffnungen aufweisen Ringscheibe, mittels der die offene Weite der beiden zweiten Einlasslöcher eingestellt werden kann. Die Justierelemente dienen dazu, das Sinkverhalten des Schwimmers und damit die beim Spülvorgang abgegebene Spülwassermenge zu justieren; sie ermöglichen jedoch nicht, den aus dem Zwei-Mengen-Ablaufventil abfließenden Spülwasservolumenstrom einzustellen.

Die WO 2016/067304 A2 offenbart ein Durchflusssteuerventil, welches einen zylindrischen Körper, einen darin drehbar gelagerten, buchsenförmigen Kolben, mindestens eine Fluiddichtung in Form einer innerhalb des zylindrischen Körpers fest angeordneten, Durchgangsöffnungen aufweisenden ersten Scheibe, einen stabförmigen Griff und eine Mutter aufweist. Das Durchflusssteuerventil ist zwischen einem Einlass und einem Auslass eines Rohrs angeschlossen, um den Durchfluss von Flüssigkeit oder Gas, die bzw. das durch das Rohr strömt, selbst bei hoher Temperatur und hohem Druck zu steuern. Der innerhalb des zylindrischen Körpers drehbar gelagerte, buchsenförmige Kolben ist an seinem der Durchgangsöffnungen aufweisenden ersten Scheibe zugewandten Ende ebenfalls mit einer Durchgangsöffnungen aufweisenden zweiten Scheibe versehen, die drehfest mit dem Kolben verbunden ist. Durch Drehen des Kolbens mittels des stabförmigen Griffes können die Durchgangsöffnungen der beiden Scheiben so zueinander positioniert werden, dass sie teilweise, komplett oder nicht miteinander fluchten. Der WO 2016/067304 A2 lässt sich jedoch nicht entnehmen, dass das dort beschriebene Durchflusssteuerventil als Ablaufventil für einen sanitären Spülkasten bzw. zum Drosseln eines Spülstroms aus einem sanitären Spülkasten geeignet wäre.

Die DE 198 21 648 A1 offenbart eine manuell verstellbare Durchflussdrossel, die insbesondere für verfahrenstechnische Anlagen bestimmt ist, in welchen es notwendig ist, Strömungsmengen gasförmiger oder flüssiger Medien in Rohrleitungen ein einziges Mal, beispielsweise bei Inbetriebnahme der Anlage, einzustellen. Hierzu weist die Durchflussdrossel zwei hintereinander angeordnete, relativ zueinander drehbare Drosselscheiben auf, die jeweils mit mindestens einer exzentrisch angeordneten Durchflussöffnung versehen sind, so dass durch Drehung einer der Drosselscheiben relativ zu der anderen die Strömungsmenge gasförmiger oder flüssiger Medien eingestellt werden kann. Eine Verwendung dieser Durchflussdrossel in Verbindung mit einem sanitären Spülkasten oder einem Ablaufventil eines sanitären Spülkastens lässt sich der DE 198 21 648 A1 nicht entnehmen.

Die US 1660 010 A zeigt ein Sieb für ein Abwaschbecken bzw. ein Spülbecken. Das Sieb umfasst einen Siebkörper, der aus einer plattenförmigen Scheibe gebildet ist, die Öffnungen und einen umlaufenden Flansch aufweist. Der Siebkörper ist innerhalb eines Ringes angeordnet, wobei eine Löcher aufweisende Ventilscheibe auf der plattenförmigen Scheibe angeordnet ist. Die Löcher der Ventilscheibe entsprechen in ihrer Form und Größe den Öffnungen der plattenförmigen Scheibe. Durch Drehung der Ventilscheibe relativ zu der plattenförmigen Scheibe wird das Sieb und damit die Ablauföffnung eines Abwaschbeckens oder Spülbeckens verschlossen oder geöffnet. Eine Verwendung dieses Siebes in Verbindung mit einem sanitären Spülkasten oder einem Ablaufventil eines sanitären Spülkastens lässt sich der US 1 660 010 A nicht entnehmen.

Der vorliegenden Erfindung liegt die Aufgabe zugrunde, eine Vorrichtung bereitzustellen, mittels der sich der Spülstrom aus einem sanitären Spülkasten komfortabler und zuverlässig einstellen lässt.

Gelöst wird diese Aufgabe durch eine Vorrichtung mit den in Anspruch 1 angegebenen Merkmalen. Des Weiteren wird diese Aufgabe durch ein Ablaufventil mit den in Anspruch 8 angegebenen Merkmalen sowie durch einen sanitären Spülkasten mit den in Anspruch 11 angegebenen Merkmalen gelöst. Bevorzugte und vorteilhafte Ausgestaltungen der erfindungsgemäßen Lösung sind in den Unteransprüchen 2 bis 7, 9 bis 10 und 12 sowie 13 angegeben.

Die erfindungsgemäße Vorrichtung ist dadurch gekennzeichnet, dassdie wirksame Größe des mindestens einen freien Strömungsquerschnitts durch Drehen des drehbaren Drosselelements in Raststufen veränderbar ist, wobei an den einander zugewandten Stirnkanten der Drosselelemente Rastelemente ausgebildet sind, die die eingestellte Stellung des drehbaren Drosselelements gegenüber dem anderen Drosselelement sichern und somit ein ungewolltes Verdrehen des Drosselelements im montierten Zustand der Drossel verhindern, wobei mindestens eines der Drosselelemente mit einem stabförmigen Griff, der als Montagehilfe zum Einsetzen der Drossel in den Ablaufstutzen des Ablaufventils oder in den den Ablaufstutzen aufnehmenden Anschlussstutzen dient, versehen ist.

Die Erfindung schafft die Möglichkeit, eine Einstellung des Spülstroms, d.h. des Volumenstroms des Spülwassers mittels vorzugsweise nur eines einzelnen verstellbaren Elements durchführen zu können. Da somit nicht mehr verschiedene Drosselringe mit unterschiedlichen Innendurchmessern in den Ventilsitz eingelegt werden müssen, gestaltet sich die Einstellung des Spülstroms mit der erfindungsgemäßen Vorrichtung erheblich komfortabler als mit den herkömmlichen Drosselringen. Zudem bietet die Erfindung einen Kostenvorteil, da durch sie nur eine einzelne Drossel für unterschiedliche Einstellungen des Spülstroms erforderlich ist. Die erfindungsgemäße Drossel kann auch als Spülstromdrossel bezeichnet werden.

Die Erfindung basiert auf dem Grundgedanken, dass eine Durchgangsöffnungsreduzierung im Ablaufbereich des Spülkastens zur variablen Verringerung der Spülstromstärke nicht durch mehrere verschiedene Drosselringe mit unterschiedlichen Innendurchmessern erfolgen muss, sondern dass hierzu auch eine einzelne verstellbare Drossel verwendet werden kann.

Die erfindungsgemäße Vorrichtung zeichnet sich insbesondere durch ihre einfache Realisierbarkeit aus. Sie lässt sich ohne aufwendige konstruktive Änderung eines bereits vorhandenen Ablaufventils bzw. eines bereits vorhandenen Spülkastens verwirklichen. Denn die erfindungsgemäße Drossel (Spülstromdrossel) kann als Zusatzteil auf einfache Weise mit dem Ablaufstutzen eines Spülkasten-Ablaufventils bzw. einem den Ablaufstutzen aufnehmenden Anschlussstutzen des Spülkastens kombiniert werden. Die Kombination des Ablaufstutzens bzw. Anschlussstutzens mit der variabel einstellbaren Drossel als Zusatzteil kann beispielsweise durch eine stoffschlüssige Verbindung von Drossel und Ablaufstutzen bzw. Anschlussstutzen erfolgen. Vorzugsweise ist jedoch vorgesehen, dass die Drossel oder mindestens eines der Drosselelemente in den Ablaufstutzen oder in den den Ablaufstutzen aufnehmenden Anschlussstutzen formschlüssig und/oder kraftschlüssig einsetzbar ist. Hierdurch werden eine einfache Montage der Drossel sowie eine einfache Demontage der Drossel ermöglicht. Beispielsweise kann hierzu der Ablaufstutzen des Ablaufventils oder der den Ablaufstutzen aufnehmende Anschlussstutzen eine Halterung zur formschlüssigen Verbindung der Drossel aufweisen.

Dadurch, dass die wirksame Größe des mindestens einen freien Strömungsquerschnitts durch Drehen des drehbaren Drosselelements in Raststufen veränderbar ist, lässt sich die wirksame Größe des mindestens einen freien Strömungsquerschnitts sehr komfortabel in Abhängigkeit eines bestimmten Sanitärkeramikmodells und/oder einer bestimmten Höhendifferenz zwischen Spülkasten und Sanitärkeramik einstellen. Denn dabei kann dem Installateur beispielsweise eine Tabelle zur Verfügung gestellt werden, in der verschiedene Sanitärkeramikmodelle und/oder verschiedene Werte bezüglich der Höhendifferenz zwischen Spülkasten und Sanitärkeramik angegeben sind, wobei den verschiedenen Sanitärkeramikmodellen und/oder Höhendifferenzen spezifische Einstell- oder Raststufen der Spülstromdrossel zugeordnet sind. Der Installateur kann der Tabelle dann die für das jeweilige Sanitärkeramikmodell bzw. die jeweilige Höhendifferenz geeignete Einstell- oder Raststufe entnehmen und dementsprechend mittels des drehbaren Drosselelements die wirksame Größe des mindestens einen freien Strömungsquerschnitts passend einstellen.

Eine vorteilhafte Ausgestaltung der erfindungsgemäßen Vorrichtung ist dadurch gekennzeichnet, dass die Drosselelemente scheibenförmig ausgebildet sind und stegförmige Abschnitte aufweisen, die mindestens zwei freie Strömungsquerschnitte begrenzen und sich in Richtung der Drehachse des drehbaren Drosselelements verjüngen. Durch diese Ausgestaltung lässt sich die Drossel sehr gut mit der Stutzenform bewährter Ablaufventile sowie sanitärer Spülkästen kombinieren. Durch die Verjüngung der stegförmigen Abschnitte des scheibenförmigen Drosselelements in Richtung der Drehachse lässt sich bei vorgegebener Innenquerschnittsfläche des Ablaufstutzens oder Anschlussstutzens ein relativ großer Einstellbereich für eine variable Querschnittsreduzierung realisieren. Das jeweilige scheibenförmige Drosselelement kann dabei zwei, drei, vier oder auch mehr stegförmige Abschnitte aufweisen und somit entsprechend viele freie Strömungsquerschnitte begrenzen.

Die durch die stegförmigen Abschnitte des betreffenden Drosselelements begrenzten freien Strömungsquerschnitte entsprechenden vorzugsweise im Wesentlichen einem Kreissektor, d.h. der jeweilige freie Strömungsquerschnitt wird vorzugsweise durch zwei konzentrische, radial beabstandete Kreisbögen unterschiedlicher Bogenlänge und zwei Kreisradien begrenzt.

Die stegförmigen Abschnitte des betreffenden Drosselelements können auch als Speichen oder kreissektorförmige Speichen bezeichnet werden.

Die Flächengröße des jeweiligen stegförmigen Abschnitts ist vorzugsweise deutlich kleiner als die Flächengröße des von zwei dieser stegförmigen Abschnitte des betreffenden Drosselelements begrenzten freien Strömungsquerschnitts. Hierdurch wird sichergestellt, dass selbst dann, wenn die Drosselelemente zur Reduzierung des freien Strömungsquerschnitts maximal gegeneinander verdreht sind, so dass sich die stegförmigen Abschnitte der Drosselelemente nicht mehr überdecken, gleichwohl noch ein freier, allerdings reduzierter Strömungsquerschnitt verbleibt. Beispielsweise beträgt die maximale Flächengröße des von zwei der stegförmigen Abschnitte des betreffenden Drosselelements begrenzten freien Strömungsquerschnitts mindestens das Doppelte, vorzugsweise mehr als das Doppelte der Flächengröße des jeweiligen stegförmigen Abschnitts.

Nach einer weiteren vorteilhaften Ausgestaltung der erfindungsgemäßen Vorrichtung sind die stegförmigen Abschnitte mindestens eines der Drosselelemente durch einen ringförmigen Abschnitt des Drosselelements miteinander verbunden. Diese Ausgestaltung verbessert die Stabilität des betreffenden Drosselelements. Insbesondere lässt sich hierdurch eine besonders zuverlässige Verbindung von Drossel und Ablaufstutzen bzw. Anschlussstutzen erzielen.

Nach einer weiteren vorteilhaften Ausgestaltung der erfindungsgemäßen Vorrichtung ist der Griff lösbar mit dem Drosselelement verbindbar, so dass er nach erfolgtem Einsatz der Drossel in den Ablaufstutzen des Ablaufventils bzw. in den Anschlussstutzen des Spülkastens von der Drossel getrennt werden kann. Die lösbare Verbindung des Griffs mit dem betreffenden Drosselelement kann beispielsweise als reibschlüssige Steckverbindung, Bajonettverbindung oder Gewindeverbindung ausgeführt sein.

Der stabförmige Griff kann insbesondere stangen- oder rohrförmig ausgebildet sein. Bei der reibschlüssigen Steckverbindung handelt es sich um eine Klemmverbindung, bei welcher das mit dem Griff lösbar verbindbare Drosselelement eine Klemmaufnahme (Klemmhalterung) für den stangen- oder rohrförmigen Griff aufweist.

Eine weitere vorteilhafte Ausgestaltung der Erfindung ist dadurch gekennzeichnet, dass das drehbare Drosselelement mit dem anderen Drosselelement verclipst ist. Hierzu weist beispielsweise das drehbare Drosselelement an seinem die stegförmigen Abschnitte verbindenden ringförmigen Abschnitt radial nach innen vorspringende Bereiche auf, an denen radial nach außen vorspringende Rastnasen ausgebildet sind, wobei die Rastnasen jeweils einen radial einwärts vorspringenden Absatz hintergreifen, der an der Innenseite des ringförmigen Abschnitts des anderen Drosselelements ausgebildet ist.

Wie oben bereits erwähnt, wird die der Erfindung zugrunde liegende Aufgabe auch durch ein Ablaufventil mit den in Anspruch 8 angegebenen Merkmalen gelöst.

Das erfindungsgemäße Ablaufventil für einen sanitären Spülkasten, insbesondere Toilettenspülkasten, umfasst eine Ventilfassung, einen eine Dichtfläche oder Dichtung aufweisenden Ventilkörper, der in der Ventilfassung beweglich gelagert ist, einen Ablaufstutzen, einen an dem Ablaufstutzen ausgebildeten Ventilsitz, wobei die Dichtfläche oder Dichtung im geschlossenen Zustand des Ablaufventils auf dem Ventilsitz aufliegt und im geöffneten Zustand des Ablaufventils eine vom Ablaufstutzen definierte Ablauföffnung freigibt, und eine Drossel, die mindestens einen freien Strömungsquerschnitt definiert, wobei die Drossel in Spülstromfließrichtung betrachtet hinter dem Ventilsitz im Ablaufstutzen des Ablaufventils angeordnet ist. Erfindungsgemäß weist die Drossel dabei mindestens zwei Drosselelemente auf, von denen eines relativ zu einem anderen der Drosselelemente drehbar ist, so dass durch Drehen des drehbaren Drosselelements relativ zu dem anderen Drosselelement die Größe des mindestens einen freien Strömungsquerschnitts veränderbar ist, wobei an den einander zugewandten Stirnkanten der Drosselelemente Rastelemente ausgebildet sind, die die eingestellte Stellung des drehbaren Drosselelements gegenüber dem anderen Drosselelement sichern und somit ein ungewolltes Verdrehen des Drosselelements im montierten Zustand der Drossel verhindern.

Das erfindungsgemäße Ablaufventil ermöglicht es, die Einstellung des Spülstroms mittels einer einzigen, variabel einstellbaren Drossel vorzunehmen.

Dadurch, dass die Drossel des erfindungsgemäßen Ablaufventils innerhalb des Ablaufstutzens des Ablaufventils angeordnet und gelagert ist, kann der Spülstrom sehr komfortabel und unabhängig von einem den Ablaufstutzen aufnehmenden Anschlussstutzen des Spülkastens eingestellt werden. Dabei kann der Installateur die wirksame Größe des mindestens einen freien Strömungsquerschnitts, den die Drossel definiert, anhand der zuvor spezifizierten Tabelle entnehmen und eine Einstellung dieser Größe vor einem Einbau des Ablaufventils in den sanitären Spülkasten vornehmen. Ebenso kann diese Größe auch nach einem Test des Spülvorgangs und einer Entnahme des Ablaufventils aus dem Spülkasten durch gegebenenfalls erneute Einstellung der Drossel geändert bzw. optimiert werden.

In konstruktiver sowie funktionaler Hinsicht ist es günstig, wenn mindestens eines der Drosselelemente in den Ablaufstutzen des Ablaufventils formschlüssig und/oder kraftschlüssig einsetzbar ist.

Des Weiteren wird die der Erfindung zugrunde liegende Aufgabe auch durch einen sanitären Spülkasten, insbesondere einen Toilettenspülkasten, mit den in Anspruch 11 angegebenen Merkmalen gelöst.

Der erfindungsgemäße Spülkasten, insbesondere Toilettenspülkasten, hat einen Anschlussstutzen, in den ein Ablaufstutzen eines Ablaufventils einsteckbar ist, wobei das Ablaufventil eine Ventilfassung, einen eine Dichtfläche oder Dichtung aufweisenden Ventilkörper, der in der Ventilfassung beweglich gelagert ist, und einen an dem Ablaufstutzen ausgebildeten Ventilsitz aufweist, wobei die Dichtfläche oder Dichtung im geschlossenen Zustand des Ablaufventils auf dem Ventilsitz aufliegt und im geöffneten Zustand des Ablaufventils eine vom Ablaufstutzen definierte Ablauföffnung freigibt, und eine Drossel, die mindestens einen freien Strömungsquerschnitt definiert, wobei die Drossel in Spülstromfließrichtung betrachtet hinter dem Ventilsitz in dem den Ablaufstutzen aufnehmenden Anschlussstutzen des Spülkastens angeordnet ist. Erfindungsgemäß weist die Drossel mindestens zwei Drosselelemente auf, von denen eines relativ zu einem anderen der Drosselelemente drehbar ist, so dass durch Drehen des drehbaren Drosselelements relativ zu dem anderen Drosselelement die Größe des mindestens einen freien Strömungsquerschnitts veränderbar ist, wobei an den einander zugewandten Stirnkanten der Drosselelemente Rastelemente ausgebildet sind, die die eingestellte Stellung des drehbaren Drosselelements gegenüber dem anderen Drosselelement sichern und somit ein ungewolltes Verdrehen des Drosselelements im montierten Zustand der Drossel verhindern. Somit wird ein sanitärer Spülkasten bereitgestellt, bei dem der Spülstrom mittels einer einzigen einstellbaren Drossel variabel und komfortabel eingestellt werden kann.

In konstruktiver sowie funktionaler Hinsicht ist es günstig, wenn mindestens eines der Drosselelemente in den Anschlussstutzen des Spülkastens formschlüssig und/oder kraftschlüssig einsetzbar ist. Durch eine derartige Ausführung kann der Spülstrom sehr komfortabel und unabhängig von dem Ablaufventil des Spülkastens eingestellt werden. Der Installateur kann die wirksame Größe des mindestens einen freien Strömungsquerschnitts, den die Drossel definiert, wiederum anhand der zuvor spezifizierten Tabelle entnehmen und eine Einstellung dieser Größe sowohl vor als auch nach einem Einbau des Ablaufventils in den sanitären Spülkasten vornehmen.

Nachfolgend wird die Erfindung anhand einer mehrere Ausführungsbeispiele darstellenden Zeichnung näher erläutert. Es zeigen:
- Fig. 1: einen Abschnitt eines Spülkastens, der in einem Längsschnitt und in perspektivischer Darstellung gezeigt ist, mit einem darin angeordneten Ablaufventil, das mit einer variablen Spülstromdrossel versehen ist;
- Fig. 2: den Abschnitt des Spülkastens aus Fig. 1, wiederum im Längsschnitt und in perspektivischer Darstellung, mit dem darin angeordneten Ablaufventil mit der Spülstromdrossel, in einer Ansicht von schräg unten;
- Fig. 3: den Spülkasten aus den Figuren 1 und 2 in einer Ansicht von unten, wobei sich stegförmige Abschnitte zweier scheibenförmiger Drosselelemente überdecken;
- Fig. 4: den Spülkasten aus den Figuren 1 bis 3 in einer Ansicht von unten, wobei die scheibenförmigen Drosselelemente der Spülstromdrossel gegeneinander verdreht sind;
- Fig. 5: einen unteren Abschnitt eines Ablaufventils für einen sanitären Spülkasten, mit einem einen Ventilsitz aufweisenden Ablaufstutzen und einer darin formschlüssig gehaltenen variablen Spülstromdrossel, in einer Axialschnittansicht;
- Fig. 6: ein weiteres Ausführungsbeispiel einer erfindungsgemäßen Vorrichtung zum variablen Drosseln des Spülstroms aus einem sanitären Spülkasten, in einer axialen Längsschnittansicht;
- Fig. 7 und 8: die Vorrichtung aus Fig. 6 in verschiedenen perspektivischen Darstellungen; und
- Fig. 9: die Vorrichtung aus Fig. 6 in einer der Fig. 8 entsprechenden Darstellung, wobei hier im Vergleich zu Fig. 8 das eine bzw. untere Drosselelement gegenüber dem anderen Drosselelement um einen bestimmten Drehwinkel gedreht ist, so dass die freien Strömungsquerschnitte reduziert sind.

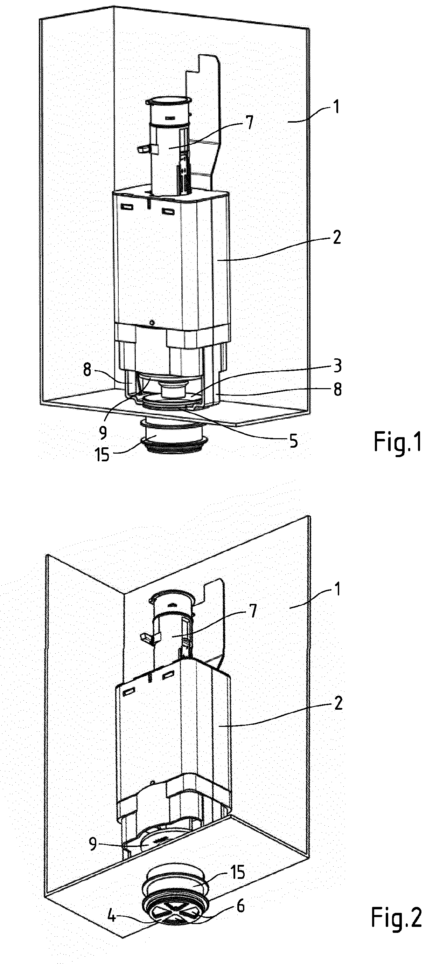

In den Figuren 1 und 2 ist ein Abschnitt eines sanitären Spülkastens 1 dargestellt. Der Boden des Spülkastens 1 ist mit einem rohrförmigen Anschlussstutzen 15 versehen, in den ein Ablaufstutzen 5 eines Ablaufventils 2 einsteckbar bzw. eingesteckt ist. In der Mantelfläche des Ablaufstutzens 5 ist mindestens eine Ringnut ausgebildet, in die ein gummielastischer Dichtring eingesetzt ist, der den Ablaufstutzen 5 des Ablaufventils 2 gegenüber dem Anschlussstutzen des Spülkastens 1 flüssigkeitsdicht abdichtet. An dem Ablaufstutzen 5 ist ein Ventilsitz 3 ausgebildet.

Der Ventilsitz 3 ist über Abstandshalter 8 mit der Ventilfassung des Ablaufventils 2 verbunden. Die Abstandshalter 8 sind stegförmig ausgebildet und an dem Ablaufstutzen 5 angebracht, vorzugsweise angeformt. Sie weisen einen von dem Ablaufstutzen 5 radial nach außen vorspringenden Stegabschnitt und einen sich daran anschließenden, im Wesentlichen vertikal verlaufenden Stegabschnitt auf. Der untere Teil der Ventilfassung oberhalb der Abstandshalter 8 ist im Wesentlichen hülsenförmig oder hohlzylindrisch ausgebildet.

Dem Ventilsitz 3 ist ein Ventilkörper 7 zugeordnet, der als Überlaufrohr ausgebildet und in der Ventilfassung axialbeweglich geführt ist. An seinem unteren Ende weist der Ventilkörper 7 eine ringförmige Dichtfläche oder Dichtung 9 auf. Im geschlossenen Zustand des Ablaufventils 2 liegt die Dichtfläche oder Dichtung 9 auf dem Ventilsitz 3 auf. Im geöffneten Zustand des Ablaufventils 2 ist der Ventilkörper 7 mit der daran befestigten Dichtung 9 angehoben, so dass die Dichtung 9 die durch den Ventilsitz 3 begrenzte Durchgangsöffnung freigibt. In den Figuren 1 und 2 ist das Ablaufventil 2 im geöffneten Zustand gezeigt.

In den Ablaufstutzen 5 des Ablaufventils 2 oder in den Anschlussstutzen 15 des Spülkastens 1 ist eine Drosselvorrichtung eingesetzt, mittels der sich der bei geöffnetem Ablaufventil aus dem Spülkasten 1 fließende Spülstrom variabel einstellen lässt. Die Drosselvorrichtung ist aus einer Drossel 4 gebildet, die mindestens einen freien Strömungsquerschnitt 6 definiert.

Die Drossel 4 ist in Spülstromfließrichtung betrachtet hinter dem Ventilsitz 3 am oder im Ablaufstutzen 5 des Ablaufventils 2 oder in dem den Ablaufstutzen 5 aufnehmenden Anschlussstutzen 15 des Spülkasten 1 angeordnet. Sie weist zwei Drosselelemente 4.1, 4.2 auf, von denen das eine relativ zu dem anderen drehbar ist. In dem in den Figuren 2 bis 4 dargestellten Ausführungsbeispiel definiert die Drossel 4 vier freie Strömungsquerschnitte 6. Durch Drehen des Drosselelements 4.1 relativ zu dem Drosselelement 4.2 lässt sich die Größe der freien Strömungsquerschnitte 6 variabel verändern.

Die Drosselelemente 4.1, 4.2 sind vorzugsweise im Wesentlichen scheibenförmig ausgebildet und weisen stegförmige Abschnitte 4.11, 4.21 auf, die sich in Richtung der Drehachse 12 des drehbaren Drosselelements 4.1 verjüngen. Des Weiteren sind die stegförmigen Abschnitte 4.11, 4.21 des jeweiligen Drosselelements 4.1, 4.2 vorzugsweise durch einen ringförmigen Abschnitt 4.3, 4.4 des betreffenden Drosselelements 4.1, 4.2 miteinander verbunden. Die stegförmigen Abschnitte 4.11, 4.21 können auch als Stege oder Speichen bezeichnet werden.

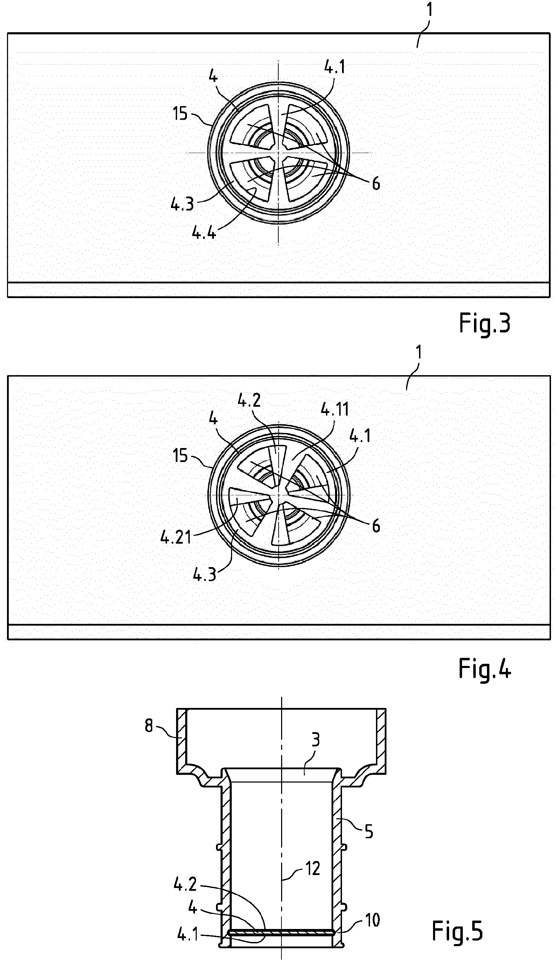

In Figur 3 ist der sanitäre Spülkasten 1 aus den Figuren 1 und 2 in einer Ansicht von unten dargestellt. Die in den Anschlussstutzen 15 des Spülkastens 1 oder in den Ablaufstutzen 5 des Ablaufventils 2 eingesetzte Drossel 4 befindet sich in Fig. 3 in einer Ausgangsstellung, in welcher sich die stegförmigen Abschnitte 4.11, 4.21 der beiden Drosselelemente 4.1, 4.2 derart überdecken, dass die von den stegförmigen Abschnitte 4.11, 4.21 begrenzten freien Strömungsquerschnitte 6 eine maximale Größe haben.

Anstelle von vier stegförmigen Abschnitten (Speichen) 4.11, 4.21 kann das jeweilige im Wesentlichen scheibenförmige Drosselelement 4.1, 4.2 auch nur zwei, drei oder mehr als vier stegförmige Abschnitte aufweisen.

In Figur 4 ist die gleiche Ansicht wie in Figur 3 gezeigt, jedoch mit dem Unterschied, dass das drehbare scheibenförmige Drosselelement 4.1 der Drossel 4 relativ zu dem anderen scheibenförmigen Drosselelement 4.2 um ein bestimmtes Maß gedreht ist und die von den stegförmigen Abschnitten begrenzten freien Strömungsquerschnitte 6 reduziert sind. Die stegförmigen Abschnitte 4.11, 4.21 der Drosselelemente 4.1, 4.2 sind derart konfiguriert, dass bei maximaler Drosselung eine gewisse Mindestgröße der freien Strömungsquerschnitte 6 nicht unterschritten wird.

Figur 5 zeigt eine Axialschnittansicht des Ablaufstutzens 5 eines Ablaufventils für einen sanitären Spülkasten. In dieser Ausführungsform weist der Ablaufstutzen 5 eine Halterung 10, vorzugweise eine Ringnut auf, die der formschlüssigen Festlegung der Drossel 4 dient. Diese konstruktive Ausgestaltung ermöglicht eine kostengünstige und einfache Montage der erfindungsgemäßen Drossel 4.

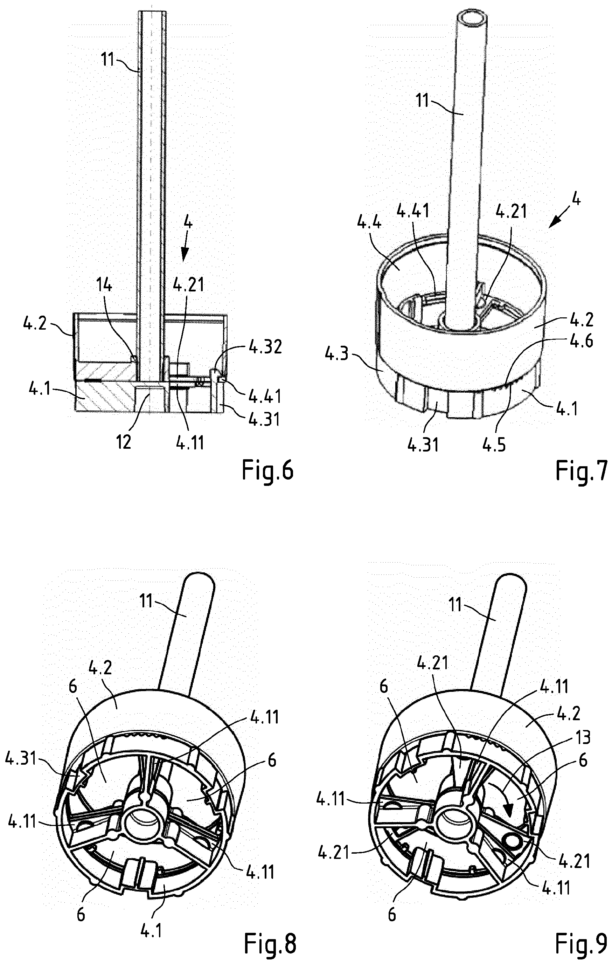

In den Figuren 6 bis 9 ist ein weiteres Ausführungsbeispiel einer erfindungsgemäßen Vorrichtung bzw. Drossel 4 zur variablen Einstellung des Spülstroms aus einem sanitären Spülkasten dargestellt. Die Spülstromdrossel 4 ist aus einem ersten Drosselelement 4.2 in Form eines ringförmigen Einsatzes, einem mit dem ersten Drosselelement 4.2 drehbar verbundenen zweiten Drosselelement 4.1 und einem Griff 11 zusammengesetzt. Das zweite Drosselelement 4.1 kann auch als Durchflussmengenbegrenzer bezeichnet werden.

Das erste Drosselelement 4.2 ist oben und unten geöffnet und weist an seiner Unterseite drei stegförmige Abschnitte 4.21 auf. Das zweite Drosselelement 4.1 ist mit dem ersten Drosselelement 4.2 verclipst und weist ebenfalls drei stegförmige Abschnitte 4.11 auf. In einer in den Figuren 7 und 8 gezeigten Ausgangsstellung (oder Nullstellung) liegen die stegförmigen Abschnitte 4.11, 4.21 deckungsgleich übereinander, so dass die durch die stegförmigen Abschnitte 4.11, 4.21 begrenzten freien Strömungsquerschnitte 6 eine vorgegebene maximale Größe haben. Durch Drehen des Durchflussmengenbegrenzers werden die stegförmigen Abschnitte 4.11, 4.21 gegeneinander verschwenkt, wodurch die freien Strömungsquerschnitte 6 stufenweise reduziert werden. Dadurch wird der Spülstrom (Volumenstrom des Spülwassers) aus dem Spülkasten in die angeschlossene WC- oder Urinal-Keramik variabel reduziert. Das Drehen des Drosselelements 4.1 relativ zu dem Drosselelement 4.2 ist in Fig. 9 durch den Pfeil 13 angezeigt. Die sich in Richtung der Drehachse 12 verjüngenden stegförmigen Abschnitte 4.11, 4.21 der Drosselelemente 4.1, 4.2 können, wie in diesem Ausführungsbeispiel gezeigt, jeweils ein im Wesentlichen T-förmiges Querschnittsprofil aufweisen.

Die Verclipsung der beiden Drosselelemente 4.1, 4.2 ist insbesondere in Fig. 6 zu erkennen. Das drehbare Drosselelement 4.1 weist an seinem die stegförmigen Abschnitte 4.11 verbindenden ringförmigen Abschnitt 4.3 radial nach innen vorspringende Bereiche 4.31 auf, an denen radial nach außen vorspringende Rastnasen 4.32 ausgebildet sind. Die Rastnasen 4.32 hintergreifen jeweils einen radial einwärts vorspringenden Absatz 4.41, der an der Innenseite des ringförmigen Abschnitts 4.4 des ersten Drosselelements 4.2 (ringförmigen Einsatzes) ausgebildet ist.

Des Weiteren können an den einander zugewandten Stirnkanten der Drosselelemente 4.1, 4.2 Rastelemente 4.5, 4.6 ausgebildet sein, die die eingestellte Stellung des drehbaren Drosselelements 4.1 gegenüber dem anderen Drosselelement 4.2 sichern und somit ein ungewolltes Verdrehen des Drosselelements 4.1 im montierten Zustand der Drossel 4 verhindern.

Der stangen- oder rohrförmig ausgebildete Griff 11 dient als Montagehilfe zum Einsatz der Drossel 4 in den Anschlussstutzen des Spülkastens 1 bzw. in den Ablaufstutzen 5 des Ablaufventils 2. Der Griff 11 ist lösbar mit der Drossel 4 verbunden. Die lösbare Verbindung ist beispielsweise als Klemmverbindung ausgeführt, wobei das Drosselelement 4.2 eine Klemmaufnahme (Klemmhalterung) 14 für den Griff 11 aufweist.

Die Ausführung der Erfindung ist nicht auf die in der Zeichnung dargestellten Ausführungsbeispiele beschränkt. Vielmehr sind weitere Varianten denkbar, die auch bei einer von den gezeigten Beispielen abweichenden Gestaltung von der in den Ansprüchen angegebenen Erfindung Gebrauch machen.

## Patentansprüche

1. Vorrichtung zum Drosseln des Spülstroms aus einem sanitären Spülkasten (1), insbesondere einem Toilettenspülkasten, welcher ein Ablaufventil (2) enthält, das eine Ventilfassung, einen eine Dichtfläche oder Dichtung (9) aufweisenden Ventilkörper (7), der in der Ventilfassung beweglich gelagert ist, einen Ablaufstutzen (5) und einen an dem Ablaufstutzen (5) ausgebildeten Ventilsitz (3) aufweist, wobei die Dichtfläche oder Dichtung (9) im geschlossenen Zustand des Ablaufventils (2) auf dem Ventilsitz (3) aufliegt und im geöffneten Zustand des Ablaufventils (2) eine vom Ablaufstutzen (5) definierte Ablauföffnung freigibt, mit einer Drossel (4), die mindestens einen freien Strömungsquerschnitt (6) definiert, wobei die Drossel (4) in Spülstromfließrichtung betrachtet hinter dem Ventilsitz (3) im Ablaufstutzen (5) des Ablaufventils (2) oder in einem den Ablaufstutzen (5) aufnehmenden Anschlussstutzen (15) anordenbar ist, wobei die Drossel (4) mindestens zwei Drosselelemente (4.1, 4.2) aufweist, von denen eines relativ zu einem anderen der Drosselelemente (4.2) drehbar ist, so dass durch Drehen des drehbaren Drosselelements (4.1) relativ zu dem anderen Drosselelement (4.2) die Größe des mindestens einen freien Strömungsquerschnitts (6) veränderbar ist, **dadurch gekennzeichnet, dass** die wirksame Größe des mindestens einen freien Strömungsquerschnitts (6) durch Drehen des drehbaren Drosselelements (4.1) in Raststufen veränderbar ist, wobei an den einander zugewandten Stirnkanten der Drosselelemente (4.1, 4.2) Rastelemente (4.5, 4.6) ausgebildet sind, die die eingestellte Stellung des drehbaren Drosselelements (4.1) gegenüber dem anderen Drosselelement (4.2) sichern und somit ein ungewolltes Verdrehen des Drosselelements (4.1) im montierten Zustand der Drossel (4) verhindern, wobei mindestens eines der Drosselelemente (4.1, 4.2) mit einem stabförmigen Griff (11), der als Montagehilfe zum Einsetzen der Drossel (4) in den Ablaufstutzen (5) des Ablaufventils (2) oder in den den Ablaufstutzen (5) aufnehmenden Anschlussstutzen (15) dient, versehen ist.

2. Vorrichtung nach Anspruch 1, **dadurch gekennzeichnet, dass** die Drosselelemente (4.1, 4.2) scheibenförmig ausgebildet sind und stegförmige Abschnitte (4.11, 4.21) aufweisen, die mindestens zwei freie Strömungsquerschnitte (6) begrenzen und sich in Richtung der Drehachse (12) des drehbaren Drosselelements (4.1) verjüngen.

3. Vorrichtung nach Anspruch 2, **dadurch gekennzeichnet, dass** die stegförmigen Abschnitte (4.11, 4.21) mindestens eines der Drosselelemente (4.1, 4.2) durch einen ringförmigen Abschnitt (4.3, 4.4) des Drosselelements (4.1, 4.2) miteinander verbunden sind.

4. Vorrichtung nach einem der Ansprüche 1 bis 3, **dadurch gekennzeichnet, dass** der Griff (11) lösbar mit dem Drosselelement (4.2) verbindbar ist.

5. Vorrichtung nach Anspruch 4, **dadurch gekennzeichnet, dass** die lösbare Verbindung des Griffs (11) mit dem Drosselelement (4.2) als reibschlüssige Steckverbindung, Bajonettverbindung oder Gewindeverbindung ausgeführt ist.

6. Vorrichtung nach einem der Ansprüche 1 bis 5, **dadurch gekennzeichnet, dass** das drehbare Drosselelement (4.1) mit dem anderen Drosselelement (4.2) verclipst ist.

7. Vorrichtung nach den Ansprüchen 3 und 6, **dadurch gekennzeichnet, dass** das drehbare Drosselelement (4.1) an seinem die stegförmigen Abschnitte (4.11) verbindenden ringförmigen Abschnitt (4.3) radial nach innen vorspringende Bereiche (4.31) aufweist, an denen radial nach außen vorspringende Rastnasen (4.32) ausgebildet sind, wobei die Rastnasen (4.32) jeweils einen radial einwärts vorspringenden Absatz (4.41) hintergreifen, der an der Innenseite des ringförmigen Abschnitts (4.4) des anderen Drosselelements (4.2) ausgebildet ist.

8. Ablaufventil (2) für einen sanitären Spülkasten (1), insbesondere Toilettenspülkasten, mit einer Ventilfassung, einem eine Dichtfläche oder Dichtung (9) aufweisenden Ventilkörper (7), der in der Ventilfassung beweglich gelagert ist, einem Ablaufstutzen (5), einem an dem Ablaufstutzen (5) ausgebildeten Ventilsitz (3) aufweist, wobei die Dichtfläche oder Dichtung (9) im geschlossenen Zustand des Ablaufventils (2) auf dem Ventilsitz (3) aufliegt und im geöffneten Zustand des Ablaufventils (2) eine vom Ablaufstutzen (5) definierte Ablauföffnung freigibt, und einer Drossel (4), die mindestens einen freien Strömungsquerschnitt (6) definiert, wobei die Drossel (4) in Spülstromfließrichtung betrachtet hinter dem Ventilsitz (3) im Ablaufstutzen (5) des Ablaufventils (2) angeordnet ist, **dadurch gekennzeichnet, dass** die Drossel (4) mindestens zwei Drosselelemente (4.1, 4.2) aufweist, von denen eines relativ zu einem anderen der Drosselelemente (4.2) drehbar ist, so dass durch Drehen des drehbaren Drosselelements (4.1) relativ zu dem anderen Drosselelement (4.2) die Größe des mindestens einen freien Strömungsquerschnitts (6) veränderbar ist, wobei die wirksame Größe des mindestens einen freien Strömungsquerschnitts (6) durch Drehen des drehbaren Drosselelements (4.1) in Raststufen veränderbar ist, wobei an den einander zugewandten Stirnkanten der Drosselelemente (4.1, 4.2) Rastelemente (4.5, 4.6) ausgebildet sind, die die eingestellte Stellung des drehbaren Drosselelements (4.1) gegenüber dem anderen Drosselelement (4.2) sichern und somit ein ungewolltes Verdrehen des Drosselelements (4.1) im montierten Zustand der Drossel (4) verhindern.

9. Ablaufventil nach Anspruch 8, **dadurch gekennzeichnet, dass** die im Ablaufstutzen (5) des Ablaufventils (2) angeordnete Drossel (4) gemäß der in einem der Ansprüche 1 bis 7 definierten Drossel (4) ausgebildet ist.

10. Ablaufventil nach Anspruch 8 oder 9, **dadurch gekennzeichnet, dass** mindestens eines der Drosselelemente (4.1, 4.2) in den Ablaufstutzen (5) formschlüssig und/oder kraftschlüssig einsetzbar ist.

11. Sanitärer Spülkasten (1), insbesondere Toilettenspülkasten, mit einem Anschlussstutzen, in den ein Ablaufstutzen (5) eines Ablaufventils (2) einsteckbar ist, wobei das Ablaufventil (2) eine Ventilfassung, einen eine Dichtfläche oder Dichtung (9) aufweisenden Ventilkörper (7), der in der Ventilfassung beweglich gelagert ist, und einen an dem Ablaufstutzen (5) ausgebildeten Ventilsitz (3) aufweist, wobei die Dichtfläche oder Dichtung im geschlossenen Zustand des Ablaufventils (2) auf dem Ventilsitz (3) aufliegt und im geöffneten Zustand des Ablaufventils (2) eine vom Ablaufstutzen (5) definierte Ablauföffnung freigibt, und mit einer Drossel (4), die mindestens einen freien Strömungsquerschnitt (6) definiert, wobei die Drossel (4) in Spülstromfließrichtung betrachtet hinter dem Ventilsitz (3) in dem den Ablaufstutzen (5) aufnehmenden Anschlussstutzen (15) des Spülkastens (1) angeordnet ist, **dadurch gekennzeichnet, dass** die Drossel (4) mindestens zwei Drosselelemente (4.1, 4.2) aufweist, von denen eines relativ zu einem anderen der Drosselelemente (4.2) drehbar ist, so dass durch Drehen des drehbaren Drosselelements (4.1) relativ zu dem anderen Drosselelement (4.2) die Größe des mindestens einen freien Strömungsquerschnitts (6) veränderbar ist, wobei die wirksame Größe des mindestens einen freien Strömungsquerschnitts (6) durch Drehen des drehbaren Drosselelements (4.1) in Raststufen veränderbar ist, wobei an den einander zugewandten Stirnkanten der Drosselelemente (4.1, 4.2) Rastelemente (4.5, 4.6) ausgebildet sind, die die eingestellte Stellung des drehbaren Drosselelements (4.1) gegenüber dem anderen Drosselelement (4.2) sichern und somit ein ungewolltes Verdrehen des Drosselelements (4.1) im montierten Zustand der Drossel (4) verhindern.

12. Spülkasten (1) nach Anspruch 11, **dadurch gekennzeichnet, dass** die in dem Anschlussstutzen (15) des Spülkastens angeordnete Drossel (4) gemäß der in einem der Ansprüche 1 bis 7 definierten Drossel ausgebildet ist.

13. Spülkasten (1) nach Anspruch 11 oder 12, **dadurch gekennzeichnet, dass** mindestens eines der Drosselelemente (4.1, 4.2) in den Anschlussstutzen (15) formschlüssig und/oder kraftschlüssig einsetzbar ist.

## Claims

1. Device for reducing the flushing stream from a sanitary flush box (1), in particular a toilet flush box, which contains a drain valve (2), which has a valve mounting, a valve member (7) that has a sealing surface or seal (9) and is movably mounted in the valve mounting, a drain connection (5), and a valve seat (3) formed on the drain connection (5), the sealing surface or seal (9) resting on the valve seat (3) in the closed state of the drain valve (2) and, in the open state of the drain valve (2), freeing an outlet opening delimited by the drain connection (5), said device comprising a throttle (4), which defines at least one free flow cross section (6), the throttle (4), viewed in the flushing stream flow direction, can be arranged behind the valve seat (3) in the drain connection (5) of the drain valve (2) or in a connection piece (15) receiving the drain connection (5), the throttle (4) comprising at least two throttle elements (4.1, 4.2), one of which can be rotated relative to another of the throttle elements (4.2) such that, by rotating the rotatable throttle element (4.1) relative to the other throttle element (4.2), the size of the at least one free flow cross section (6) can be changed, **characterised in that** the effective size of the at least one free flow cross section (6) can be changed by rotating the rotatable throttle element (4.1) in latching steps, wherein latching elements (4.5, 4.6), which secure the adjusted position of the rotatable throttle element (4.1) relative to the other throttle element (4.2) and therefore prevent unintentional rotation of the throttle element (4.1) in the mounted state of the throttle (4), are formed on the mutually facing end edges of the throttle elements (4.1, 4.2), wherein at least one of the throttle elements (4.1, 4.2) is provided with a rod-shaped handle (11), which functions as a mounting aid for inserting the throttle (4) into the drain connection (5) of the drain valve (2) or into the connection piece (15) receiving the drain connection (5).

2. Device according to claim 1, **characterised in that** the throttle elements (4.1, 4.2) are disc-shaped and have web-shaped portions (4.11, 4.21), which define at least two free flow cross sections (6) and taper towards the rotational axis (12) of the rotatable throttle element (4.1).

3. Device according to claim 2, **characterised in that** the web-shaped portions (4.11, 4.21) of at least one of the throttle elements (4.1, 4.2) are interconnected by an annular portion (4.3, 4.4) of the throttle element (4.1, 4.2).

4. Device according to any of claims 1 to 3, **characterised in that** the handle (11) is detachably connectable to the throttle element (4.2).

5. Device according claim 4, **characterised in that** the detachable connection of the handle (11) to the throttle element (4.2) is configured as a frictional plug-in connection, bayonet connection or threaded connection.

6. Device according to any of claims 1 to 5, **characterised in that** the rotatable throttle element (4.1) is clipped to the other throttle element (4.2).

7. Device according to claims 3 and 6, **characterised in that** the rotatable throttle element (4.1), at its annular portion (4.3) connecting the web-shaped portions (4.11), has radially inwardly projecting regions (4.31), on which radially outwardly projecting latching lugs (4.32) are formed, each of the latching lugs (4.32) engaging behind a radially inwardly projecting shoulder (4.41), which is formed on the inside of the annular portion (4.4) of the other throttle element (4.2).

8. Drain valve (2) for a sanitary flush box (1), in particular a toilet flush box, comprising a valve mounting, a valve member (7) that has a sealing surface or seal (9) and is movably mounted in the valve mounting, a drain connection (5), a valve seat (3) formed on the drain connection (5), the sealing surface or seal (9) resting on the valve seat (3) in the closed state of the drain valve (2) and, in the open state of the drain valve (2), freeing an outlet opening delimited by the drain connection (5), and a throttle (4), which defines at least one free flow cross section (6), the throttle (4), viewed in the flushing stream flow direction, is arranged behind the valve seat (3) in the drain connection (5) of the drain valve (2), **characterised in that** the throttle (4) comprises at least two throttle elements (4.1, 4.2), one of which can be rotated relative to another of the throttle elements (4.2) such that, by rotating the rotatable throttle element (4.1) relative to the other throttle element (4.2), the size of the at least one free flow cross section (6) can be changed, wherein the effective size of the at least one free flow cross section (6) can be changed by rotating the rotatable throttle element (4.1) in latching steps, wherein latching elements (4.5, 4.6), which secure the adjusted position of the rotatable throttle element (4.1) relative to the other throttle element (4.2) and therefore prevent unintentional rotation of the throttle element (4.1) in the mounted state of the throttle (4), are formed on the mutually facing end edges of the throttle elements (4.1, 4.2).

9. Drain valve according to claim 8, **characterised in that** the throttle (4) arranged in the drain connection (5) of the drain valve (2) is configured according to the throttle (4) defined in any of claims 1 to 7.

10. Drain valve according to either claim 8 or claim 9, **characterised in that** at least one of the throttle elements (4.1, 4.2) can be positively and/or non-positively inserted into the drain connection (5).

11. Sanitary flush box (1), in particular a toilet flush box, comprising a connection piece, into which a drain connection (5) of a drain valve (2) can be inserted, the drain valve (2) comprising a valve mounting, a valve member (7) that has a sealing surface or seal (9) and is movably mounted in the valve mounting, and a valve seat (3) formed on the drain connection (5), the sealing surface or seal resting on the valve seat (3) in the closed state of the drain valve (2) and, in the open state of the drain valve (2), freeing an outlet opening delimited by the drain connection (5), and said flush box comprising a throttle (4), which defines at least one free flow cross section (6), the throttle (4), viewed in the flushing stream flow direction, is arranged behind the valve seat (3) in the connection piece (15) of the flush box (1) receiving the drain connection (5), **characterised in that** the throttle (4) comprises at least two throttle elements (4.1, 4.2), one of which can be rotated relative to another of the throttle elements (4.2) such that, by rotating the rotatable throttle element (4.1) relative to the other throttle element (4.2), the size of the at least one free flow cross section (6) can be changed, wherein the effective size of the at least one free flow cross section (6) can be changed by rotating the rotatable throttle element (4.1) in latching steps, wherein latching elements (4.5, 4.6), which secure the adjusted position of the rotatable throttle element (4.1) relative to the other throttle element (4.2) and therefore prevent unintentional rotation of the throttle element (4.1) in the mounted state of the throttle (4), are formed on the mutually facing end edges of the throttle elements (4.1, 4.2).

12. Flush box (1) according to claim 11, **characterised in that** the throttle (4) arranged in the connection piece (15) of the flush box is configured according to the throttle defined in any of claims 1 to 7.

13. Flush box (1) according to either claim 11 or claim 12, **characterised in that** at least one of the throttle elements (4.1, 4.2) can be positively and/or non-positively inserted into the connection piece (15).

## Revendications

1. Dispositif servant à réduire le flux de rinçage sortant d'un réservoir de chasse d'eau sanitaire (1), en particulier d'un réservoir de chasse d'eau des toilettes qui comprend une valve d'évacuation (2) qui présente un support de valve, un corps de valve (7) présentant une surface d'étanchéité ou un joint d'étanchéité (9), lequel corps de valve est logé de façon mobile dans le support de valve, valve d'évacuation qui présente une tubulure d'évacuation (5) et un siège de valve (3) formé sur la tubulure d'évacuation (5), où la surface d'étanchéité ou le joint d'étanchéité (9) vient en appui sur le siège de valve (3) quand la valve d'évacuation (2) est à l'état fermé et, quand la valve d'évacuation (2) est à l'état ouvert, ladite surface d'étanchéité ou ledit joint d'étanchéité dégage une ouverture d'évacuation définie par la tubulure d'évacuation (5), ladite valve d'évacuation comprenant un réducteur (4) qui définit au moins une section d'écoulement libre (6), où le réducteur (4), en regardant dans la direction d'écoulement du flux de rinçage, peut être disposé derrière le siège de valve (3), dans la tubulure d'évacuation (5) de la valve d'évacuation (2), ou bien peut être disposé dans une tubulure de raccordement (15) logeant la tubulure d'évacuation (5), où le réducteur (4) présente au moins deux éléments de réducteur (4.1, 4.2) dont l'un des éléments du réducteur peut être tourné par rapport à l'autre élément (4.2) du réducteur, de sorte que la taille de la section d'écoulement libre (6) au moins au nombre de un peut être modifiée par rotation de l'élément (4.1) du réducteur pouvant tourner par rapport à l'autre élément (4.2) du réducteur,
**caractérisé en ce que** la taille utile de la section d'écoulement libre (6) au moins au nombre de un peut être modifiée par rotation de l'élément (4.1) du réducteur pouvant tourner suivant des crans d'arrêt, où des éléments d'encliquetage (4.5, 4.6) sont configurés sur les bords frontaux des éléments (4.1, 4.2) du réducteur, lesdits bords frontaux étant tournés l'un vers l'autre, lesquels éléments d'encliquetage garantissent la position réglée de l'élément (4.1) du réducteur pouvant tourner par rapport à l'autre élément (4.2) du réducteur et, par conséquent, empêchent une rotation non voulue de l'élément (4.1) du réducteur, quand le réducteur (4) est à l'état monté, où au moins l'un des éléments (4.1, 4.2) du réducteur est doté d'une poignée (11) en forme de tige, poignée qui sert d'aide au montage pour l'introduction du réducteur (4) dans la tubulure d'évacuation (5) de la valve d'évacuation (2), ou bien pour l'introduction dans la tubulure de raccordement (15) logeant la tubulure d'évacuation (5).

2. Dispositif selon la revendication 1, **caractérisé en ce que** les éléments (4.1, 4.2) du réducteur sont configurés en forme de disques et présentent des parties (4.11, 4.21) en forme de barrettes qui délimitent au moins deux sections d'écoulement libres (6) et diminuent en direction de l'axe de rotation (12) de l'élément rotatif (4.1) du réducteur.

3. Dispositif selon la revendication 2, **caractérisé en ce que** les parties en forme de barrettes (4.11, 4.21) au moins de l'un des éléments (4.1, 4.2) du réducteur sont assemblées l'une à l'autre par une partie de forme annulaire (4.3, 4.4) de l'élément (4.1, 4.2) du réducteur.

4. Dispositif selon l'une quelconque des revendications 1 à 3, **caractérisé en ce que** la poignée (11) peut être reliée à l'élément (4.2) du réducteur, de manière amovible.

5. Dispositif selon la revendication 4, **caractérisé en ce que** l'assemblage amovible de la poignée (11), avec l'élément (4.2) du réducteur, est réalisé comme un raccord à emboîtement étant assemblé par frottement, comme un raccord à baïonnette ou comme un raccord fileté.

6. Dispositif selon l'une quelconque des revendications 1 à 5, **caractérisé en ce que** l'élément rotatif (4.1) du réducteur est clipsé avec l'autre élément (4.2) du réducteur.

7. Dispositif selon les revendications 3 et 6, **caractérisé en ce que** l'élément rotatif (4.1) du réducteur, au niveau de sa partie (4.3) de forme annulaire reliant les parties (4.11) en forme de barrettes, présente des zones (4.31) faisant saillie vers l'intérieur dans le sens radial, zones sur lesquelles sont configurés des ergots d'encliquetage (4.32) faisant saillie vers l'extérieur dans le sens radial, où les ergots d'encliquetage (4.32) viennent à chaque fois en prise, par l'arrière, sur un épaulement (4.41) faisant saillie vers l'intérieur dans le sens radial, lequel épaulement est configuré sur le côté intérieur de la partie (4.4), de forme annulaire, de l'autre élément (4.2) du réducteur.

8. Valve d'évacuation (2) pour un réservoir de chasse d'eau sanitaire (1), en particulier pour un réservoir de chasse d'eau des toilettes, laquelle valve d'évacuation présente un support de valve, un corps de valve (7) présentant une surface d'étanchéité ou un joint d'étanchéité (9), lequel corps de valve est logé de façon mobile dans le support de valve, laquelle valve d'évacuation présente une tubulure d'évacuation (5), un siège de valve (3) formé sur la tubulure d'évacuation (5), où la surface d'étanchéité ou le joint d'étanchéité (9) vient en appui sur le siège de valve (3) quand la valve d'évacuation (2) est à l'état fermé et, quand la valve d'évacuation (2) est à l'état ouvert, ladite surface d'étanchéité ou ledit joint d'étanchéité dégage une ouverture d'évacuation définie par la tubulure d'évacuation (5), ladite valve d'évacuation comprenant un réducteur (4) qui définit au moins une section d'écoulement libre (6), où le réducteur (4), en regardant dans la direction d'écoulement du flux de rinçage, est disposé derrière le siège de valve (3), dans la tubulure d'évacuation (5) de la valve d'évacuation (2),
**caractérisée en ce que** le réducteur (4) présente au moins deux éléments de réducteur (4.1, 4.2) dont l'un des éléments du réducteur peut être tourné par rapport à l'autre élément (4.2) du réducteur, de sorte que la taille de la section d'écoulement libre (6) au moins au nombre de un peut être modifiée par rotation de l'élément (4.1) du réducteur pouvant tourner par rapport à l'autre élément (4.2) du réducteur, où la taille utile de la section d'écoulement libre (6) au moins au nombre de un peut être modifiée par rotation de l'élément (4.1) du réducteur pouvant tourner suivant des crans d'arrêt, où des éléments d'encliquetage (4.5, 4.6) sont configurés sur les bords frontaux des éléments (4.1, 4.2) du réducteur, lesdits bords frontaux étant tournés l'un vers l'autre, lesquels éléments d'encliquetage garantissent la position réglée de l'élément (4.1) du réducteur pouvant tourner par rapport à l'autre élément (4.2) du réducteur et, par conséquent, empêchent une rotation non voulue de l'élément (4.1) du réducteur, quand le réducteur (4) est à l'état monté.

9. Valve d'évacuation selon la revendication 8, **caractérisée en ce que** le réducteur (4) disposé dans la tubulure d'évacuation (5) de la valve d'évacuation (2) est configuré conformément au réducteur (4) défini dans l'une quelconque des revendications 1 à 7.

10. Valve d'évacuation selon la revendication 8 ou 9, **caractérisée en ce qu'**au moins l'un des éléments (4.1, 4.2) du réducteur peut être introduit dans la tubulure d'évacuation (5), par complémentarité de forme et/ou par action de force.

11. Réservoir de chasse d'eau sanitaire (1), en particulier réservoir de chasse d'eau des toilettes, comprenant une tubulure de raccordement dans laquelle peut être emboîtée une tubulure d'évacuation (5) d'une valve d'évacuation (2), où la valve d'évacuation (2) présente un support de valve, un corps de valve (7) présentant une surface d'étanchéité ou un joint d'étanchéité (9), lequel corps de valve est logé de façon mobile dans le support de valve, et ladite valve d'évacuation présente un siège de valve (3) formé sur la tubulure d'évacuation (5), où la surface d'étanchéité ou le joint d'étanchéité (9) vient en appui sur le siège de valve (3) quand la valve d'évacuation (2) est à l'état fermé et, quand la valve d'évacuation (2) est à l'état ouvert, ladite surface d'étanchéité ou ledit joint d'étanchéité dégage une ouverture d'évacuation définie par la tubulure d'évacuation (5), et avec un réducteur (4) qui définit au moins une section d'écoulement libre (6), où le réducteur (4), en regardant dans la direction d'écoulement du flux de rinçage, est disposé derrière le siège de valve (3), dans la tubulure de raccordement (15) du réservoir de chasse d'eau (1), ladite tubulure de raccordement logeant la tubulure d'évacuation (5),
**caractérisée en ce que** le réducteur (4) présente au moins deux éléments de réducteur (4.1, 4.2) dont l'un des éléments du réducteur peut être tourné par rapport à l'autre élément (4.2) du réducteur, de sorte que la taille de la section d'écoulement libre (6) au moins au nombre de un peut être modifiée par rotation de l'élément (4.1) du réducteur pouvant tourner par rapport à l'autre élément (4.2) du réducteur, où la taille utile de la section d'écoulement libre (6) au moins au nombre de un peut être modifiée par rotation de l'élément (4.1) du réducteur pouvant tourner suivant des crans d'arrêt, où des éléments d'encliquetage (4.5, 4.6) sont configurés sur les bords frontaux des éléments (4.1, 4.2) du réducteur, lesdits bords frontaux étant tournés l'un vers l'autre, lesquels éléments d'encliquetage garantissent la position réglée de l'élément (4.1) du réducteur pouvant tourner par rapport à l'autre élément (4.2) du réducteur et, par conséquent, empêchent une rotation non voulue de l'élément (4.1) du réducteur, quand le réducteur (4) est à l'état monté.

12. Réservoir de chasse d'eau (1) selon la revendication 11, **caractérisé en ce que** le réducteur (4) disposé dans la tubulure de raccordement (15) du réservoir de chasse d'eau est configuré conformément au réducteur défini dans l'une quelconque des revendications 1 à 7.

13. Réservoir de chasse d'eau (1) selon la revendication 11 ou 12, **caractérisé en ce qu'**au moins l'un des éléments (4.1, 4.2) du réducteur peut être introduit dans la tubulure de raccordement (15), par complémentarité de forme et/ou par action de force.
